# EUROPEAN PATENT SPECIFICATION

(11) **EP 3 534 571 B1**
(45) Date of publication and mention of the grant of the patent: **03.03.2021**
(21) Application number: 16921924.3
(22) Date of filing: 15.11.2016
(51) Int. Cl.: H04L 12/437, H04L 12/24

(54) **SERVICE PACKET TRANSMISSION METHOD, AND NODE APPARATUS**
DIENSTPAKETÜBERTRAGUNGSVERFAHREN UND KNOTENVORRICHTUNG
PROCÉDÉ DE TRANSMISSION DE PAQUET DE SERVICE, ET APPAREIL DE NOEUD

(43) Date of publication of application: 04.09.2019
(73) Proprietor: Huawei Technologies Co., Ltd., Longgang District Shenzhen, Guangdong 518129 (CN)
(72) Inventor: WANG, Bin, Shenzhen Guangdong 518129 (CN); MENG, Wanhong, Shenzhen Guangdong 518129 (CN)
(74) Representative: Thun, Clemens
(86) International application number: PCT/CN2016/105966
(87) International publication number: WO 2018/090210

(56) References cited:
- EP-A1- 2 512 070
- EP-A2- 2 618 523
- CN-A- 103 190 121
- CN-A- 104 283 758
- CN-A- 104 883 337
- CN-A- 105 763 483
- US-A1- 2013 258 840
- US-A1- 2015 036 544

## Description

### TECHNICAL FIELD

The present invention relates to the field of communications technologies, and in particular, to a service packet transmission method and a node device.

### BACKGROUND

The ERPS (Ethernet Ring Protection Switching) protocol is a G.8032 protocol defined by the ITU-T (International Telecommunication Union Telecommunication Standardization Sector), and is a link layer protocol specially used for Ethernet ring protection. When an Ethernet ring is complete, the ERPS protocol can prevent a broadcast storm caused by a data loop. When a link on the Ethernet ring is disconnected, the ERPS protocol can quickly enable a backup link, to restore a communication channel between nodes on the ring network.

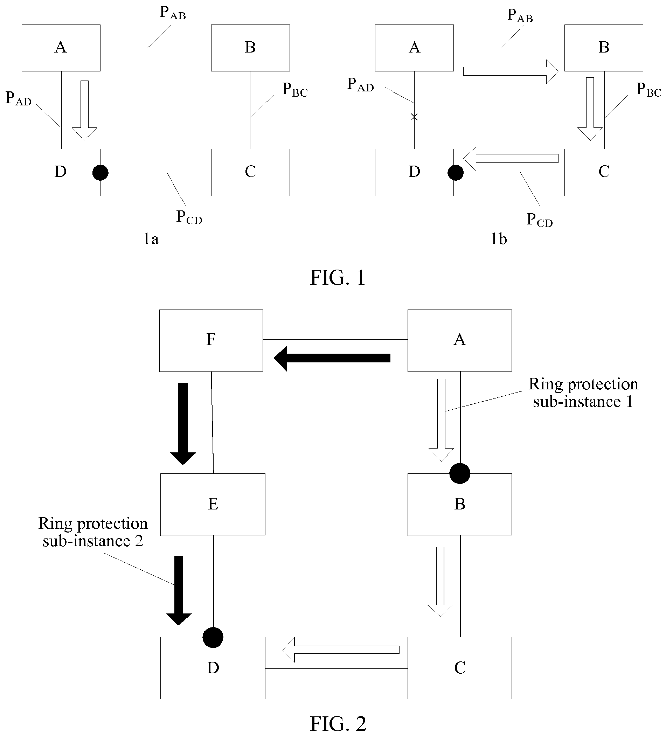

FIG. 1 is a schematic architectural diagram of an existing ERPS network. The ERPS network includes an ERPS ring that includes node devices A, B, C, and D. For ease of description, a link between A and B is referred to as P_{AB}, a link between B and C is referred to as P_{BC}, a link between C and D is referred to as P_{CD}, and a link between A and D is referred to as P_{AD}. The node device D is a protection node. On the node device D, a port connected to the device C is a ring protection link (RPL) port. P_{CD} is an RPL link. When all links on a network are in an up state, as shown in FIG. 1a in FIG. 1, the RPL port is in a blocked state. In this case, a protocol status of the ERPS protocol is an idle state, data of the device A and the device D is forwarded by using the link P_{AD}. When the link P_{AD} is disconnected, as shown in FIG. 1b in FIG. 1, in this case, the protocol status of the ERPS protocol is a protection state, a status of the RPL port is changed from a blocked state to a forwarding state, data between the device A and the device D is forwarded by using the links P_{CD}, P_{BC}, and P_{AB} in turn.

It is found through study that, as stipulated by the present protocol, normally, the protocol is in the idle state, and the backup link cannot be used for data transmission. In this case, all data streams are forwarded by using only one link when the link is normal, and other links are in the idle state, causing bandwidth waste.

EP 2 618 523 A2 refers to an Ethernet ring protection switching method, network device and system. A node obtains bandwidth information of a first link on an Ethernet ring where the node is located, and determines that bandwidth of the first link changes, where there is at least one Ethernet ring protection instance on the Ethernet ring, and then the node determines ports of the node, where the at least one Ethernet ring protection instance passes through the ports, so that the node can query preconfigured correspondence between bandwidth information and switching information of each link on the Ethernet ring, and execute, through the ports of the node, a switching operation corresponding to the bandwidth information of the first link.

US 2013/0258840 A1 refers to a node includes a first port configured to be selectively blocked and unblocked; a second port configured to be selectively blocked and unblocked; a forwarder between the first port and the second port; a management channel between the first port and the second port, wherein the selective blocking and unblocking of the first port and the second port is based on the management channel; and a data channel between the first port and the second port, wherein the data channel utilizes an arbitrary service identifier.

EP 2 512 070 A1 refers to a method for protecting a semi-ring network. The method includes: running an Ethernet ring network protection protocol at a networking port of each non-closed ring node and a networking port of each closed ring node on a semi-ring network, and adding all networking ports into a virtual local area network that is corresponding to a protection instance; and establishing a pseudo wire PWE3 based or message mechanism based connection between non-closed ring nodes on the semi-ring network, where the connection is used to transfer an Ethernet ring network protection protocol packet of the protection instance.

### SUMMARY

Embodiments of the present invention provide a service packet transmission method and a node device, to resolve a problem, existing in the prior art, of bandwidth waste caused due to that an RPL link is in an idle state. This problem is solved by the subject matter of the independent claims. Further implementation forms are provided in the dependent claims.

### BRIEF DESCRIPTION OF DRAWINGS

FIG. 1 is a schematic architectural diagram of an ERPS network for which an ERPS ring protection instance is configured in the prior art;
FIG. 2 is a schematic architectural diagram of an ERPS network for which an ERPS ring protection sub-instance is configured according to an embodiment of the present invention;
FIG. 3 is a schematic structural diagram of a computer device according to an embodiment of the present invention;
FIG. 4 is a schematic flowchart of a service packet transmission method according to an embodiment of the present invention;
FIG. 5 is a schematic structural diagram of a service packet encapsulated by using the 802.1 Q protocol according to an embodiment of the present invention;
FIG. 6 is a schematic flowchart of another service packet transmission method according to an embodiment of the present invention;
FIG. 7 is a schematic structural diagram of ERPS semi-ring networking according to an embodiment of the present invention;
FIG. 8 is a schematic structural diagram of networking in which the ERPS semi-ring networking shown in FIG. 7 is applied to multicast dual feed and selective receiving according to an embodiment of the present invention;
FIG. 9 is a schematic structural diagram of an ordinary node device according to an embodiment of the present invention; and
FIG. 10 is a schematic structural diagram of a protection node device according to an embodiment of the present invention.

### DESCRIPTION OF EMBODIMENTS

The following first explains related technical terms for an ERPS network as follows:

Ring protection instance: A plurality of logical ERPS rings are obtained through virtualization by using one physical ring, and each logical ERPS ring is referred to as one ring protection instance.

RPL (Ring Protection Link) port: The RPL port may be any port on any node device on an ERPS network. Each instance corresponds to one RPL port. When an ERPS ring is normal, to be specific, when there is no faulty link on the ERPS ring, a status of the RPL port is a blocked state.

It should be noted that, a difference between the RPL port and a common port is that, when the ERPS ring is normal, to be specific, when there is no faulty link on the ERPS ring, the RPL port is in the blocked state, and the common port is in a forwarding state; when there is a faulty link on the ERPS ring, a common port corresponding to the faulty link is switched from the forwarding state to the blocked state, and the RPL port is switched from the blocked state to the forwarding state.

Protection node: A node on which the RPL port is located is referred to as a protection node (RPL OWNER), configured to control a status of the RPL port.

Ordinary node: Another node that does not include the RPL port and that is on the ERPS network.

RPL: A link on which the RPL port is located. Normally, the RPL port is in the blocked state, and therefore, the RPL link cannot be used for normal data forwarding, and is a backup link.

Control virtual local area network (Control VLAN): A virtual wireless local area network used for managing an ERPS protocol state packet.

Ring network states stipulated by the ERPS protocol are as follows:

Idle state: A state when connections of links on a ring network are all normal and the RPL port is in the blocked state.

Protection state: A state when a link on the ring network is disconnected, and the status of the RPL port is switched to the forwarding state.

Pending state: An intermediate state when a link is faulty and is recovered on the ring network but the link has not been switched back to the idle state.

Currently, each ring protection instance on the ERPS network corresponds to one RPL port. In this embodiment, to further subdivide an existing ring protection instance, each ring protection instance is divided into at least two ring protection sub-instances, and each ring protection sub-instance respectively corresponds to one RPL port.

An embodiment of the present invention provides an ERPS network. As shown in FIG. 2, the ERPS network includes an ERPS ring that includes devices A, B, C, D, E, and F. At least one ring protection instance is configured for the ERPS ring. For one of the at least one ring protection instance, the ring protection instance includes at least two ring protection sub-instances. Each ring protection sub-instance corresponds to a different management VLAN, and each ring protection sub-instance is respectively used for transmitting a service packet that satisfies a particular condition. Each ring protection sub-instance respectively corresponds to one RPL port. For example, the ring protection instance includes a ring protection sub-instance 1 and a ring protection sub-instance 2, an RPL port corresponding to the ring protection sub-instance 1 is a port that is on the device D and that connects the device D to the device E, and an RPL port corresponding to the ring protection sub-instance 2 is a port that is on the device B and that connects the device B to the device A.

On the ERPS network shown in FIG. 2, the node device B and the node device D are protection devices. A device that does not include the RPL port is referred to as an ordinary node device. For example, the node devices A, C, E, and F in FIG. 2 are ordinary node devices.

It can be learned that, on the ERPS network provided in this embodiment of the present invention, an existing single ring protection instance is subdivided into a plurality of ring protection sub-instances, and a service packet transmitted by using the ring protection instance may be divided, so that corresponding service packets are transmitted by using different ring protection sub-instances. In this way, each ring protection sub-instance respectively corresponds to one RPL port, in other words, each ring protection sub-instance respectively corresponds to one RPL link. Therefore, normally, an RPL link of a ring protection sub-instance is a backup link for the ring protection sub-instance, but for another ring protection sub-instance, the RPL link is a link that can be used for normally performing service packet transmission. Therefore, link bandwidth on the ERPS network can be fully used.

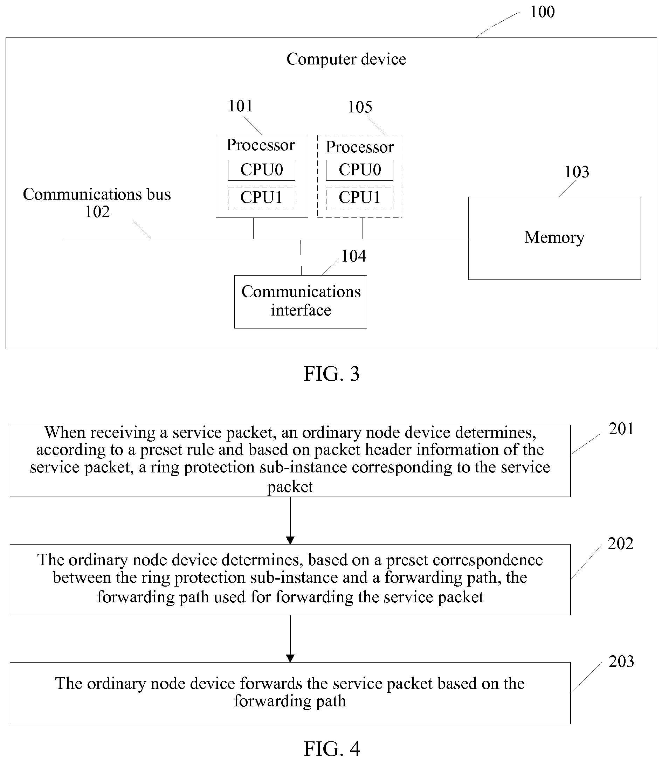

As shown in FIG. 3, the protection node devices and the ordinary node devices in FIG. 2 may be implemented by using a computer device (or system) in FIG. 3.

FIG. 3 is a schematic diagram of a computer device according to an embodiment of the present invention. The computer device 100 includes at least one processor 101, a communications bus 102, a memory 103, and at least one communications interface 104.

The processor 101 may be a general-purpose central processing unit (CPU), a microprocessor, an application-specific integrated circuit (ASIC), or one or more integrated circuits configured to control execution of a program in the solutions of the present invention.

The communications bus 102 may include a path for transmitting information between the foregoing components. The communications interface 104 is configured to communicate with another device or communications network.

The memory 103 may be a read-only memory (ROM) or another type of static storage device that can store static information and a static instruction, a random access memory (RAM), or another type of dynamic storage device that can store information and an instruction; or may be an electrically erasable programmable read-only memory (EEPROM), a compact disc read-only memory (CD-ROM) or another compact disc storage medium, optical disc storage medium (including a compact disc, a laser disc, an optical disc, a digital versatile disc, a Blu-ray disc, or the like) and magnetic disk storage medium, another magnetic storage device, or any other medium that can be configured to carry or store expected program code in a form of an instruction or a data structure and that is accessible by a computer, but is not limited thereto. The memory may independently exist and be connected to the processor by using the bus. Alternatively, the memory may be integrated with the processor.

The memory 103 is configured to store application program code for performing this solution of the present invention, and the processor 101 controls the performing. The processor 101 is configured to execute the application program code stored in the memory 103.

During specific implementation, in an embodiment, the processor 101 may include one or more CPUs, for example, a CPU 0 and a CPU 1 in FIG. 3.

During specific implementation, in an embodiment, the computer device 100 may include a plurality of processors, for example, a processor 101 and a processor 105 in FIG. 3. Each of these processors may be a single-core (single-CPU) processor, or may be a multi-core (multi-CPU) processor. The processor herein may be one or more devices or circuits, and/or a processing core configured to process data (for example, a computer program instruction).

Based on the ERPS network, according to the service packet transmission method provided in this embodiment of the present invention, a process of forwarding a service packet on the ERPS network is separately described from perspectives of an ordinary node device and a protection node device.

It should be noted that, the service packet transmission method provided in this embodiment of the present invention is applied to a case in which an ERPS ring is normally run, that is, there is no faulty link on the ERPS ring. A status of the RPL port is a blocked state.

An embodiment of the present invention further provides a service packet transmission method that can be applied to the ERPS network in FIG. 2. The method is performed by an ordinary node device shown in FIG. 3. As shown in FIG. 4, the method includes the following steps.

Step 201: When receiving a service packet, the ordinary node device determines, according to a preset rule and based on packet header information of the service packet, a ring protection sub-instance corresponding to the service packet.

The packet header information is information included in a packet header of the service packet, for example, a destination Media Access Control (MAC) address and a source MAC address of the packet, and a destination IP address, a source IP address, a priority field, and a VLAN identifier of the packet.

The preset rule is a rule that is preconfigured in ordinary node devices, and is used for providing guidance for a node device to determine, after receiving a service packet, based on packet header information of the service packet and according to the preset rule, a ring protection sub-instance corresponding to the service packet.

Optionally, the preset rule includes a correspondence between a particular field in the packet header information and the ring protection sub-instance; or a correspondence between a value obtained by performing calculation or processing on a particular field in the packet header information and the ring protection sub-instance. In a specific implementation of this step, the ordinary node device may determine, based on the obtained packet header information and packet header information that is stored in the preset rule or the correspondence between the value obtained by performing calculation or processing on the particular field in the packet header information and the ring protection sub-instance, the ring protection sub-instance corresponding to the service packet.

Step 202: The ordinary node device determines, based on a preset correspondence between the ring protection sub-instance and a forwarding path, the forwarding path used for forwarding the service packet.

In the prior art, a single ring protection instance is not further subdivided into ring protection sub-instances. Therefore, for an ordinary node device, all service packets transmitted by the ordinary node device belong to a same ring protection instance, and forwarding paths thereof are all the same. Therefore, after receiving a service packet, the ordinary node device does not need to perform any determining, but only needs to forward the service packet based on a pre-stored forwarding rule.

In this embodiment, because the ring protection instance is divided into a plurality of ring protection sub-instances and forwarding paths of different ring protection sub-instances are different, after receiving the service packet, the ordinary node device needs to determine the ring protection sub-instance corresponding to the service packet, and determine the forwarding path of the service packet based on the preset correspondence between the ring protection sub-instance and the forwarding path.

Step 203: The ordinary node device forwards the service packet based on the forwarding path.

According to the service packet transmission method provided in this embodiment of the present invention, a single ring protection instance is divided into a plurality of ring protection sub-instances. Therefore, in this embodiment of the present invention, after receiving the service packet, the ordinary node device needs to determine the ring protection sub-instance corresponding to the service packet, determine, based on the correspondence between the ring protection sub-instance and the forwarding path, the forwarding path corresponding to the ring protection sub-instance, and forward the service packet based on the forwarding path. In this way, for a ring protection sub-instance, an RPL link corresponding to the ring protection sub-instance is a backup path, and when the ring protection sub-instance is normal, cannot be used for service packet transmission. For another ring protection sub-instance, the RPL link is a normal link, and can be used for the service packet transmission. Therefore, according to the service packet transmission method provided in this embodiment of the present invention, network bandwidth of the ERPS network can be fully used.

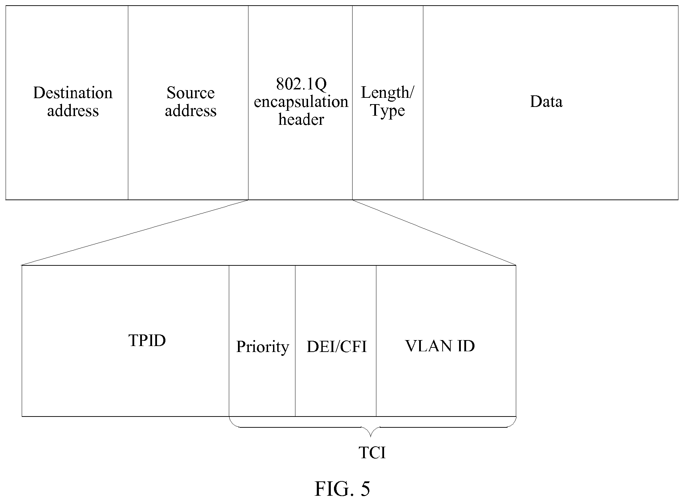

For ease of description of a possible implementation of the preset rule in this embodiment, as shown in FIG. 5, a packet encapsulated by using the 802.1Q protocol is used as an example. This embodiment of the present invention provides a packet structure of the service packet, including the packet header of the service packet and data of the service packet. The packet header information of the service packet includes a destination address (destination address), a source address (source address), an 802.1Q tag, and a length/type (Length/Type) of the service packet. The 802.1Q tag includes a Tag Protocol Identifier (TPID), and tag control information (TCI). The TCI further specifically includes a user priority, a canonical format indicator (CFI), and a VLAN identifier (VLAN ID).

The source address and the destination address indicated in the foregoing are both MAC addresses. For a specific structure of the packet, refer to the prior art.

In an implementation of the preset rule, the preset rule includes a correspondence between a hash value and the ring protection sub-instance.

The hash value is calculated based on the packet header information of the service packet. For example, the hash value is a hash value determined by performing hash calculation based on all bytes or some bytes of the source MAC address or the destination MAC address of the service packet. For another example, the hash value is a hash value determined by performing hash calculation based on all or some bytes of the destination MAC address in the packet header information of the service packet and the VLAN ID; or a hash value determined based on all or some bytes of the source MAC address and the VLAN identifier. For still another example, the hash value is a hash value determined by performing hash calculation based on all or some bytes of the VLAN identifier and the priority field in the packet header information.

When the hash value in the preset rule is obtained by performing hash calculation based on the VLAN identifier and the MAC address, step 201 "When receiving a service packet, the ordinary node device determines, according to a preset rule and based on packet header information of the service packet, a ring protection sub-instance corresponding to the service packet" specifically includes:
when receiving the service packet, calculating, by the ordinary node device based on preset bytes of a virtual local area network (VLAN) identifier and a Media Access Control (MAC) address that are carried in the packet header information, a hash value corresponding to the service packet; and determining, based on the hash value and according to the preset rule, the ring protection sub-instance corresponding to the service packet.

The MAC address is a source MAC address or a destination MAC address.

In another implementation of the preset rule, the preset rule includes a correspondence between a value of a preset field of the service packet and the ring protection sub-instance.

In this implementation, a correspondence between the preset field and the ring protection sub-instance is manually specified and saved as the preset rule.

For example, the preset field includes a VLAN identifier, and then the preset rule includes a correspondence between the VLAN identifier and the ring protection sub-instance. Specifically, the preset rule may be that, for service packets whose VLAN identifiers are VLAN100, VLAN200, and VLAN300, a corresponding ring protection sub-instance is a ring protection sub-instance 1; or for service packets whose VLAN identifiers are VLAN400 and VLAN500, a corresponding ring protection sub-instance is a ring protection sub-instance 2.

For another example, the preset field includes a VLAN identifier and a MAC address, and then the preset rule includes a correspondence between the three, namely, the VLAN identifier, the MAC address, and the ring protection sub-instance. Specifically, the preset rule may be that, for a service packet whose VLAN identifier is VLAN100 and whose MAC address has a last digit being even, a corresponding ring protection sub-instance is a ring protection sub-instance 1; for a service packet whose VLAN identifier is VLAN100 and whose MAC address has a last digit being odd, a corresponding ring protection sub-instance is a ring protection sub-instance 2; or for a service packet whose VLAN identifier is VLAN200 and whose MAC address has a last digit being odd, a corresponding ring protection sub-instance is a ring protection sub-instance 3.

For still another example, the preset field includes a priority field and a VLAN identifier field, and then the preset rule includes a correspondence between the three, namely, the priority field, the VLAN identifier field, and the ring protection sub-instance. Specifically, the preset rule may be that, when the VLAN identifier is VLAN100 and a value of the priority field is 1, a corresponding ring protection sub-instance is a ring protection sub-instance 1; when the VLAN identifier is VLAN100 and a value of the priority field is 2, a corresponding ring protection sub-instance is a ring protection sub-instance 2; when the VLAN identifier is VLAN200 and a value of the priority field is 1, a corresponding ring protection sub-instance is a ring protection sub-instance 1; or when the VLAN identifier is VLAN200 and a value of the priority field is 2, a corresponding ring protection sub-instance is a ring protection sub-instance 2.

When the preset field includes the priority field and the VLAN identifier field, correspondingly, step 201 "When receiving a service packet, the ordinary node device determines, according to a preset rule and based on packet header information of the service packet, a ring protection sub-instance corresponding to the service packet" specifically includes: obtaining, by the ordinary node device, values of the priority field and the VLAN identifier field in the packet header information when receiving the service packet; and determining, based on the values of the priority field and the VLAN identifier field and according to the preset rule, the ring protection sub-instance corresponding to the service packet.

It should be noted that, a first implementation and a second implementation of the preset rule may be applied to a process in which particular processing needs to be performed on a service packet. For example, when a service packet of a same type is transmitted in a ring protection instance, service packets of different priorities need to be forwarded by using different ring protection sub-instances. Alternatively, when a receiving end is a same destination MAC address, and relatively many service packets are sent to the receiving end, service packets for a same destination MAC address are forwarded by using different ring protection sub-instances, to scatter the service packets to different transmission paths.

In a third implementation of this embodiment, the preset rule includes a correspondence between a service type and the ring protection sub-instance. In the implementation, different ring protection sub-instances are used for transmitting services of different types.

Generally, the packet header information of the service packet includes a service type field, and the service type field may be used for indicating a service type of the service packet. For example, when a value of the service type field is a first value, a corresponding service packet type is a type 1; or when a value of the service type field is a second value, a corresponding service packet type is a type 2.

It should be noted that, different values of the TPID in the 802.1Q tag can distinguish different service types.

Corresponding to the third implementation of the preset rule, correspondingly, the determining, by an ordinary node device according to a preset rule and based on packet header information of the service packet, a ring protection sub-instance corresponding to the service packet specifically includes: obtaining, by the ordinary node device, a service type field in the packet header information of the service packet when receiving the service packet; and determining, based on the service type field and according to the preset rule, the ring protection sub-instance corresponding to the service packet.

The third implementation of the preset rule is mainly applied to a process in which when service packets of a plurality of types are transmitted in a ring protection instance, the types of the service packets need to be distinguished by using ring protection sub-instances.

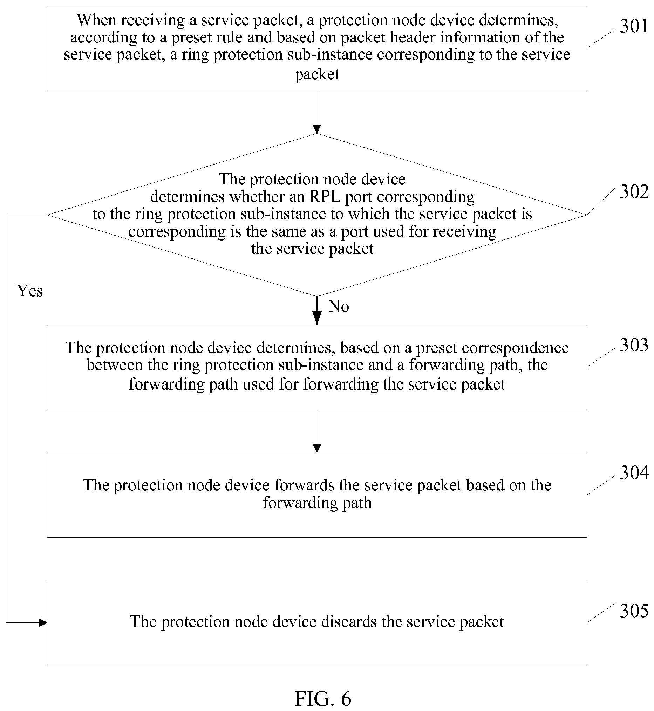

An embodiment of the present invention further provides a service packet transmission method that may also be applied to the ERPS network shown in FIG. 2. The method is performed by a protection node device that includes at least one RPL port. A specific structure of the protection node device may be the computer device shown in FIG. 3. As shown in FIG. 6, the method includes the following steps.

Step 301: When receiving a service packet, the protection node device determines, according to a preset rule and based on packet header information of the service packet, a ring protection sub-instance corresponding to the service packet.

For a specific implementation process of this step, refer to a specific implementation process of performing step 201 on an ordinary node device side.

Step 302: The protection node device determines whether an RPL port corresponding to the ring protection sub-instance to which the service packet is corresponding is the same as a port used for receiving the service packet.

When being applied to an ERPS ring, each node device includes two ports. The two ports may be both RPL ports, or only one port may be an RPL port, or the two ports may be both non-RPL ports. In another case the port used for receiving the service packet is an RPL port, and the RPL port is different from the RPL port corresponding to the determined ring protection sub-instance to which the service packet is corresponding, it indicates that the RPL port does not need to block the service packet; or the port used for receiving the service packet is a non-RPL port, namely, a common port, and then the following step 303 is performed. Otherwise, step 305 is performed.

It should be noted that, the node device may further include another port, to interact with another device outside the ERPS ring.

Step 303: The protection node device determines, based on a preset correspondence between the ring protection sub-instance and a forwarding path, the forwarding path used for forwarding the service packet.

If the next-hop port indicated in the forwarding path is another RPL port of the protection node device, the protection node device still needs to perform step 302. If the next-hop port indicated in the forwarding path is another protection node device, the another protection node device performs step 301 to step 305 again. If the next-hop port is an ordinary node device, the ordinary node device performs the foregoing step 201 to step 203.

Step 304: The protection node device forwards the service packet based on the forwarding path.

Step 305: The protection node device discards the service packet.

According to the service packet transmission method provided in this embodiment of the present invention, compared with that an RPL port of a protection node blocks all service packets in the prior art, in this embodiment of the present invention, the protection node device does not block all service packets, but can forward the service packet when the RPL port corresponding to the ring protection sub-instance to which the service packet is corresponding is different from the port used for receiving the service packet, that is, blocks only the service packet when the RPL port corresponding to the ring protection sub-instance to which the service packet is corresponding is the same as the port used for receiving the service packet. In this way, RPL link bandwidth can be fully used.

With reference to an ERPS network architecture shown in FIG. 2, when the packet transmission method provided in this embodiment of the present invention is applied, when a node A sends a service packet to a node D, when a ring protection sub-instance corresponding to the service packet is a ring protection sub-instance 1, because a node B is an RPL port corresponding to a ring protection sub-instance 2 and does not block the service packet of the ring protection sub-instance 1, the service packet can arrive at the device D along a path from A to B to C to D. Correspondingly, when a ring protection sub-instance corresponding to the service packet is a ring protection sub-instance 2, because the node D is an RPL port corresponding to a ring protection sub-instance 1 and does not block the service packet of the ring protection sub-instance 2, the service packet can arrive at the device D along a path from A to F to E to D. Therefore, the RPL link bandwidth can be fully used, so that all links on a network may be used for service packet transmission.

To more clearly describe an effect of the service packet transmission method provided in this embodiment of the present invention when the method is performed by a protection node device, descriptions are provided with reference to an application scenario of multicast dual feed and selective receiving.

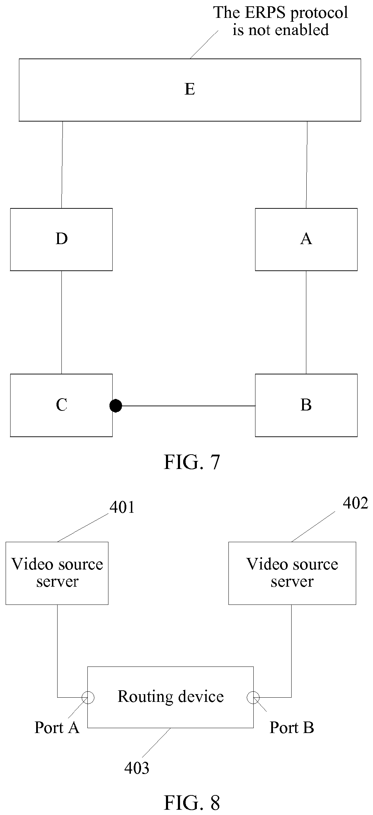

Before the application scenario of multicast dual feed and selective receiving is described, a concept of an ERPS semi-ring is first described. The ERPS semi-ring means that interconnections between node devices do not form a true ring network, but there is a "gap". For example, the ERPS protocol is not enabled on a device. However, in an application scenario of the ERPS semi-ring, a link of the ERPS network is still connected. As shown in FIG. 7, devices A, B, C, D, and E form an ERPS ring network. However, the ERPS protocol is not enabled on the device E, so that the devices A, B, C, and D form a semi-ring.

As shown in FIG. 8, a video source server 401, a video source server 402, and a routing device 403 form an ERPS semi-ring.

For ease of description, in this embodiment of the present invention, a port connecting the routing device 403 to the video source server 401 is described by using a port A, and a port connecting the routing device 403 to the video source server 402 is described by using a port B. In addition, the routing device 403 further includes a port C (located outside the ERPS semi-ring) used for connecting user equipment (not shown in the figure).

With reference to FIG. 8, the multicast dual feed and selective receiving means that, after the routing device 403 receives a multicast joining request of a user, for example, for playing a program 1 and a program 2 on demand, the routing device 403 separately sends the same joining request to the video source server 401 and the video source server 402, to request video data of the program 1 and the program 2. After that, the video source server 401 forwards video streams of both programs to the port A, and the video source server 402 forwards the video streams of both programs to the port B. In this way, on the routing device 403, each program has two video streams, and therefore for each program, one video stream needs to be selected, to be forwarded to the port C on a user side.

In the prior art, in an application scenario in which the multicast dual feed and selective receiving is applied, if only the port B is used as an RPL port, the routing device needs to send an on-demand packet to the video source servers 401 and 402 by using the port A, and needs to ensure that the packet is not sent by using the port B. The implementation process is relatively complex, and has relatively large costs. In this case, the video source servers 401 and 402 send an on-demand packet to the routing device 403 by using the port B only when the port A is disconnected, to receive the video streams from the port B. This packet control implementation solution in the prior art is relatively complex, and after a link on which the port A is located is disconnected, the routing device 403 needs to send an on-demand packet to the video source server 402 by using the port B again. A delay is relatively long, and load cannot be shared, wasting bandwidth of B.

When the service packet transmission method provided in this embodiment of the present invention is applied, the foregoing two ERPS semi-rings may be configured as two ring protection sub-instances, and the ports A and B of the routing device 403 are respectively configured as RPL ports of the two ring protection sub-instances. For ease of description, the two ring protection sub-instances are respectively referred to as the ring protection sub-instance 1 and the ring protection sub-instance 2. In addition, the RPL port corresponding to the ring protection sub-instance 1 is the port A, and allows a data stream of the program 1 to pass through; and the RPL port corresponding to the ring protection sub-instance 2 is the port B, and allows a data stream of the program 2 to pass through. In this way, when the service packet transmission method provided in this embodiment of the present invention is applied, an unwanted video stream is automatically blocked, and each program forwards only one data stream to the port C on the user side.

Switching performance of ERPS is at a millisecond level. Therefore, if a problem occurs on the port A or B, an RPL port of a ring protection sub-instance is quickly switched from a Blocked state to a forwarding state. In an entire process, nearly no packet of a video stream is lost, there is no impact on program watching by a user, multicast implementation on a device is basically not affected, and the implementation is convenient.

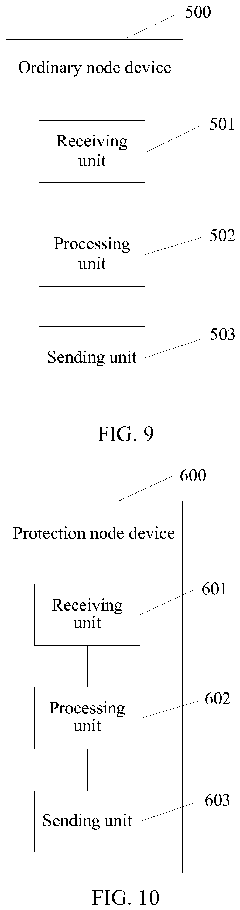

As shown in FIG. 9, an embodiment of the present invention further provides a schematic structural diagram of an ordinary node device 500, to perform the service packet transmission method shown in FIG. 3. The node device includes: a receiving unit 501, configured to receive a service packet; a processing unit 502, configured to: determine, according to a preset rule and based on packet header information of the service packet received by the receiving unit 501, a ring protection sub-instance corresponding to the service packet; and determine, based on a preset correspondence between the ring protection sub-instance and a forwarding path, the forwarding path used for forwarding the service packet; and a sending unit 503, configured to forward the service packet based on the forwarding path determined by the processing unit 502.

Optionally, the preset rule includes a correspondence between a hash value and the ring protection sub-instance. Correspondingly, the processing unit 502 is further configured to: calculate, based on preset bytes of a virtual local area network VLAN identifier and a Media Access Control (MAC) address that are carried in the packet header information of the service packet received by the receiving unit 501, a hash value corresponding to the service packet, where the MAC address is a source MAC address or a destination MAC address; and determine, based on the hash value and according to the preset rule, the ring protection sub-instance corresponding to the service packet.

Optionally, the preset rule includes a correspondence between a value of a preset field of the service packet and the ring protection sub-instance. The preset field includes a priority field and a VLAN identifier field. Correspondingly, the processing unit 502 is further configured to: obtain values of the priority field and the VLAN identifier field in the packet header information of the service packet received by the receiving unit 501; and determine, based on the values of the priority field and the VLAN identifier field and according to the preset rule, the ring protection sub-instance corresponding to the service packet.

Optionally, the preset rule includes a correspondence between a service type and the ring protection sub-instance. Correspondingly, the processing unit 502 is further configured to: obtain a service type field in the packet header information of the service packet received by the receiving unit 501, where the service type field is used for indicating the service type of the service packet; and determine, based on the service type field and according to the preset rule, the ring protection sub-instance corresponding to the service packet.

It should be noted that, all related content of the steps in the foregoing method embodiment described by using the ordinary node device as the execution body may be cited in function descriptions of corresponding functional modules. Details are not described herein again.

After the foregoing solution is used, a single ring protection instance is divided into a plurality of ring protection sub-instances. Therefore, in this embodiment of the present invention, after receiving the service packet, the ordinary node device needs to determine the ring protection sub-instance corresponding to the service packet, determine, based on the correspondence between the ring protection sub-instance and the forwarding path, the forwarding path corresponding to the ring protection sub-instance, and forward the service packet based on the forwarding path. In this way, for a ring protection sub-instance, an RPL link corresponding to the ring protection sub-instance is a backup path, and when the ring protection sub-instance is normal, cannot be used for service packet transmission. For another ring protection sub-instance, the RPL link is a normal link, and can be used for the service packet transmission. Therefore, network bandwidth of the ERPS network can be fully used.

In this embodiment, the ordinary node device is presented in a form of a functional unit. The "unit" herein may refer to an application-specific integrated circuit (ASIC), a circuit, a processor and a memory that execute one or more software or firmware programs, an integrated logical circuit, and/or another device that can provide the foregoing functions.

In a simple embodiment, a person skilled in the art may figure out that the form shown in FIG. 3 may be used for the ordinary node device. The receiving unit 501 and the sending unit 503 may be implemented by using the communications interface 104 in FIG. 3. The processing unit 502 may be implemented by using the processor 101 and the memory 103 in FIG. 3.

As shown in FIG. 10, an embodiment of the present invention further provides a schematic structural diagram of a protection node device 600, to perform the service packet transmission method shown in FIG. 6. The node device includes: a receiving unit 601, configured to receive a service packet; a processing unit 602, configured to: determine, according to a preset rule and based on packet header information of the service packet, a ring protection sub-instance corresponding to the service packet; determine whether an RPL port corresponding to the ring protection sub-instance to which the service packet is corresponding is the same as a port used for receiving the service packet; and when the RPL port corresponding to the ring protection sub-instance to which the service packet is corresponding is different from the port used for receiving the service packet, determine, based on a preset correspondence between the ring protection sub-instance and a forwarding path, the forwarding path used for forwarding the service packet; and a sending unit 603, configured to forward the service packet based on the forwarding path determined by the processing unit 602.

The processing unit 602 is further configured to discard the service packet when the RPL port corresponding to the ring protection sub-instance to which the service packet is corresponding is the same as the port used for receiving the service packet.

It should be noted that, all related content of the steps in the foregoing method embodiment described by using the protection node device as the execution body may be cited in function descriptions of corresponding functional modules. Details are not described herein again.

After the foregoing solution is used, according to the protection node device provided in this embodiment of the present invention, compared with that an RPL port of a protection node blocks all service packets in the prior art, in this embodiment of the present invention, the protection node device does not block all service packets, but can forward the service packet when the RPL port corresponding to the ring protection sub-instance to which the service packet is corresponding is different from the port used for receiving the service packet, that is, blocks only the service packet when the RPL port corresponding to the ring protection sub-instance to which the service packet is corresponding is the same as the port used for receiving the service packet.

In this embodiment, the protection node device is presented in a form of a functional unit. The "unit" herein may refer to an application-specific integrated circuit (ASIC), a circuit, a processor and a memory that execute one or more software or firmware programs, an integrated logical circuit, and/or another device that can provide the foregoing functions.

In a simple embodiment, a person skilled in the art may figure out that the form shown in FIG. 3 may be used for the protection node device. The receiving unit 601 and the sending unit 603 may be implemented by using the communications interface 104 in FIG. 3. The processing unit 602 may be implemented by using the processor 101 and the memory 103 in FIG. 3.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention as defined by the appended claims.

## Claims

1. A service packet transmission method, wherein the method is applied to an Ethernet Ring Protection Switching, ERPS, network, wherein at least one ring protection instance is configured for each ERPS ring on the ERPS network, each ring protection instance comprises at least two ring protection sub-instances, each ring protection sub-instance respectively corresponds to one ring protection link, RPL, port, a status of the RPL port is a blocked state, and the method comprises:
when receiving a service packet by an ordinary node device, determining, by the ordinary node device according to a preset rule and based on packet header information of the service packet, a ring protection sub-instance corresponding to the service packet, wherein the ordinary node device is a device that does not comprise the RPL port (201);
determining, by the ordinary node device based on a preset correspondence between the ring protection sub-instance and a forwarding path, the forwarding path used for forwarding the service packet (step 202); and
forwarding, by the ordinary node device, the service packet based on the forwarding path (203).

2. The method according to claim 1, wherein the preset rule comprises a correspondence between a hash value and the ring protection sub-instance; wherein the when receiving the service packet, determining, by the ordinary node device according to the preset rule and based on packet header information of the service packet, the ring protection sub-instance corresponding to the service packet specifically comprises:
when receiving the service packet, calculating, by the ordinary node device based on preset bytes of a virtual local area network, VLAN, identifier and a Media Access Control, MAC, address that are carried in the packet header information, a hash value corresponding to the service packet, wherein the MAC address is a source MAC address or a destination MAC address; and
determining, by the ordinary node device based on the hash value and according to the preset rule, the ring protection sub-instance corresponding to the service packet.

3. The method according to claim 1, wherein the preset rule comprises a correspondence between a value of a preset field of the service packet and the ring protection sub-instance; wherein the preset field comprises a priority field and a VLAN identifier field; and
the when receiving the service packet, determining, by the ordinary node device according to the preset rule and based on packet header information of the service packet, the ring protection sub-instance corresponding to the service packet specifically comprises:
obtaining, by the ordinary node device, values of the priority field and the VLAN identifier field in the packet header information when receiving the service packet; and
determining, by the ordinary node device based on the values of the priority field and the VLAN identifier field and according to the preset rule, the ring protection sub-instance corresponding to the service packet.

4. The method according to claim 1, wherein the preset rule comprises a correspondence between a service type and the ring protection sub-instance; wherein the when receiving the service packet, determining, by the ordinary node device according to the preset rule and based on packet header information of the service packet, the ring protection sub-instance corresponding to the service packet specifically comprises:
obtaining, by the ordinary node device, a service type field in the packet header information of the service packet when receiving the service packet, wherein the service type field is used for indicating the service type of the service packet; and
determining, by the ordinary node device based on the service type field and according to the preset rule, the ring protection sub-instance corresponding to the service packet.

5. A service packet transmission method, wherein the method is applied to an Ethernet Ring Protection Switching, ERPS, network, wherein at least one ring protection instance is configured for each ERPS ring on the ERPS network, each ring protection instance comprises at least two ring protection sub-instances, each ring protection sub-instance respectively corresponds to one ring protection link RPL port, a status of the RPL port is a blocked state, and the method comprises:
when receiving a service packet by a protection node device, determining, by the protection node device according to a preset rule and based on packet header information of the service packet, a ring protection sub-instance corresponding to the service packet, wherein the protection node device is a device that comprises at least one RPL port (301);
determining, by the protection node device, whether an RPL port corresponding to the ring protection sub-instance to which the service packet is corresponding is the same as a port used for receiving the service packet (302);
if the RPL port corresponding to the ring protection sub-instance to which the service packet is corresponding is different from the port used for receiving the service packet, determining, by the protection node device based on a preset correspondence between the ring protection sub-instance and a forwarding path, the forwarding path used for forwarding the service packet (step 303); and
forwarding, by the protection node device, the service packet based on the forwarding path (304).

6. The method according to claim 5, wherein the method further comprises:
discarding, by the protection node device, the service packet if the RPL port corresponding to the ring protection sub-instance to which the service packet is corresponding is the same as the port used for receiving the service packet.

7. An ordinary node device, wherein the ordinary node device is applied to an Ethernet Ring Protection Switching, ERPS, network, wherein at least one ring protection instance is configured for each ERPS ring on the ERPS network, each ring protection instance comprises at least two ring protection sub-instances, each ring protection sub-instance respectively corresponds to one ring protection link RPL port, a status of the RPL port is a blocked state, and as the ordinary node device not comprising the RPL port, the node device comprises:
a receiving unit, configured to receive a service packet;
a processing unit, configured to: determine, according to a preset rule and based on packet header information of the service packet received by the receiving unit, a ring protection sub-instance corresponding to the service packet; and determine, based on a preset correspondence between the ring protection sub-instance and a forwarding path, the forwarding path used for forwarding the service packet; and
a sending unit, configured to forward the service packet based on the forwarding path determined by the processing unit.

8. The ordinary node device according to claim 7, wherein the preset rule comprises a correspondence between a hash value and the ring protection sub-instance; wherein
the processing unit is further configured to: calculate, based on preset bytes of a virtual local area network VLAN identifier and a Media Access Control ,MAC, address that are carried in the packet header information of the service packet received by the receiving unit, a hash value corresponding to the service packet, wherein the MAC address is a source MAC address or a destination MAC address; and
determine, based on the hash value and according to the preset rule, the ring protection sub-instance corresponding to the service packet.

9. The ordinary node device according to claim 7, wherein the preset rule comprises a correspondence between a value of a preset field of the service packet and the ring protection sub-instance; wherein the preset field comprises a priority field and a VLAN identifier field; and
the processing unit is further configured to: obtain values of the priority field and the VLAN identifier field in the packet header information of the service packet received by the receiving unit; and
determine, based on the values of the priority field and the VLAN identifier field and according to the preset rule, the ring protection sub-instance corresponding to the service packet.

10. The ordinary node device according to claim 7, wherein the preset rule comprises a correspondence between a service type and the ring protection sub-instance; wherein
the processing unit is further configured to: obtain a service type field in the packet header information of the service packet received by the receiving unit, wherein the service type field is used for indicating the service type of the service packet; and
determine, based on the service type field and according to the preset rule, the ring protection sub-instance corresponding to the service packet.

11. A protection node device, wherein the protection node device is applied to an Ethernet Ring Protection Switching, ERPS, network, wherein at least one ring protection instance is configured for each ERPS ring on the ERPS network, each ring protection instance comprises at least two ring protection sub-instances, each ring protection sub-instance respectively corresponds to one ring protection link, RPL, port, a status of the RPL port is a blocked state, and as a device comprising at least one RPL port, the node device comprises:
a receiving unit, configured to receive a service packet;
a processing unit, configured to: determine, according to a preset rule and based on packet header information of the service packet, a ring protection sub-instance corresponding to the service packet; determine whether an RPL port corresponding to the ring protection sub-instance to which the service packet is corresponding is the same as a port used for receiving the service packet; and when the RPL port corresponding to the ring protection sub-instance to which the service packet is corresponding is different from the port used for receiving the service packet, determine, based on a preset correspondence between the ring protection sub-instance and a forwarding path, the forwarding path used for forwarding the service packet; and
a sending unit, configured to forward the service packet based on the forwarding path determined by the processing unit.

12. The protection node device according to claim 11, wherein
the processing unit is further configured to discard the service packet when the RPL port corresponding to the ring protection sub-instance to which the service packet is corresponding is the same as the port used for receiving the service packet.

13. An ordinary node device, comprising a memory, a processor, a transceiver, and a bus, wherein the memory, the processor, and the transceiver are connected to each other by using the bus, the memory stores program code, and the processor is configured to perform the method according to any one of claims 1 to 4 based on the program code.

14. A protection node device, comprising a memory, a processor, a transceiver, and a bus, wherein the memory, the processor, and the transceiver are connected to each other by using the bus, the memory stores program code, and the processor is configured to perform the method according to claim 5 or 6 based on the program code.

15. A computer-readable recording medium on which a program is recorded, wherein the program, when executed, enables the computer to perform the method according to any one of claims 1 to 4 based on the program code.

16. A computer-readable recording medium on which a program is recorded, wherein the program, when executed, enables the computer to perform the method according to any one of claims 5 or 6 based on the program code.

## Patentansprüche

1. Dienstpaketübertragungsverfahren, wobei das Verfahren auf ein Ethernet-Ring-Protection-Switching(ERPS)-Netz angewendet wird, wobei wenigstens eine Ringschutzinstanz für jeden ERPS-Ring in dem ERPS-Netz konfiguriert ist, jede Ringschutzinstanz wenigstens zwei Ringschutzteilinstanzen umfasst, jede Ringschutzteilinstanz jeweils einem Ring-Protection-Link(RPL)-Port entspricht, ein Status des RPL-Ports ein blockierter Zustand ist und das Verfahren umfasst:
bei Empfangen eines Dienstpakets durch eine herkömmliche Knotenvorrichtung, Bestimmen, durch die herkömmlichen Knotenvorrichtung gemäß einer voreingestellten Regel und basierend auf Paketkopfinformationen des Dienstpakets, einer dem Dienstpaket entsprechenden Ringschutzteilinstanz, wobei die herkömmliche Knotenvorrichtung eine Vorrichtung ist, die den RPL-Port nicht umfasst (201);
Bestimmen, durch die herkömmliche Knotenvorrichtung basierend auf einer voreingestellten Entsprechung zwischen der Ringschutzteilinstanz und einem Weiterleitungspfad, des Weiterleitungspfads, der zum Weiterleiten des Dienstpakets verwendet wird (Schritt 202); und
Weiterleiten, durch die herkömmliche Knotenvorrichtung, des Dienstpakets auf der Grundlage des Weiterleitungspfads (203).

2. Verfahren nach Anspruch 1, wobei die voreingestellte Regel eine Entsprechung zwischen einem Hashwert und der Ringschutzteilinstanz umfasst;
wobei das Bestimmen, durch die herkömmliche Knotenvorrichtung gemäß der voreingestellten Regel und basierend auf Paketkopfinformationen des Dienstpakets, der dem Dienstpaket entsprechenden Ringschutzteilinstanz bei Empfangen des Dienstpakets im Einzelnen umfasst:
bei Empfangen des Dienstpakets, Berechnen, durch die herkömmliche Knotenvorrichtung basierend auf voreingestellten Bytes einer Virtual-Local-Area-Network(VLAN)-Kennung und einer Media-Access-Control(MAC)-Adresse, die in den Paketkopfinformationen transportiert werden, eines Hashwerts, der dem Dienstpaket entspricht, wobei es sich bei der MAC-Adresse um eine Quell-MAC-Adresse oder eine Ziel-MAC-Adresse handelt; und
Bestimmen, durch die herkömmliche Knotenvorrichtung basierend auf dem Hashwert und gemäß der voreingestellten Regel, der dem Dienstpaket entsprechenden Ringschutzteilinstanz.

3. Verfahren nach Anspruch 1, wobei die voreingestellte Regel eine Entsprechung zwischen einem Wert eines voreingestellten Felds des Dienstpakets und der Ringschutzteilinstanz umfasst; wobei das voreingestellte Feld ein Prioritätsfeld und ein Feld für die VLAN-Kennung umfasst; und
das Bestimmen, durch die herkömmliche Knotenvorrichtung gemäß der voreingestellten Regel und basierend auf Paketkopfinformationen des Dienstpakets, der dem Dienstpaket entsprechenden Ringschutzteilinstanz bei Empfangen des Dienstpakets im Einzelnen umfasst:
Erhalten, durch die herkömmliche Knotenvorrichtung, von Werten des Prioritätsfelds und des Felds für die VLAN-Kennung in den Paketkopfinformationen; und
Bestimmen, durch die herkömmliche Knotenvorrichtung basierend auf den Werten des Prioritätsfelds und des Felds für die VLAN-Kennung und gemäß der voreingestellten Regel, der dem Dienstpaket entsprechenden Ringschutzteilinstanz.

4. Verfahren nach Anspruch 1, wobei die voreingestellte Regel eine Entsprechung zwischen einer Dienstart und der Ringschutzteilinstanz umfasst;
wobei das Bestimmen, durch die herkömmliche Knotenvorrichtung gemäß der voreingestellten Regel und basierend auf Paketkopfinformationen des Dienstpakets, der dem Dienstpaket entsprechenden Ringschutzteilinstanz bei Empfangen des Dienstpakets im Einzelnen umfasst:
Erhalten, durch die herkömmliche Knotenvorrichtung, eines Dienstartfelds in den Paketkopfinformationen des Dienstpakets bei Empfangen des Dienstpakets, wobei das Dienstartfeld zum Angeben der Dienstart des Dienstpakets verwendet wird; und
Bestimmen, durch die herkömmliche Knotenvorrichtung basierend auf dem Dienstartfeld und gemäß der voreingestellten Regel, der dem Dienstpaket entsprechenden Ringschutzteilinstanz.

5. Dienstpaketübertragungsverfahren, wobei das Verfahren auf ein Ethernet-Ring-Protection-Switching(ERPS)-Netz angewendet wird, wobei wenigstens eine Ringschutzinstanz für jeden ERPS-Ring in dem ERPS-Netz konfiguriert ist, jede Ringschutzinstanz wenigstens zwei Ringschutzteilinstanzen umfasst, jede Ringschutzteilinstanz jeweils einem Ring-Protection-Link(RPL)-Port entspricht, ein Status des RPL-Ports ein blockierter Zustand ist und das Verfahren umfasst:
bei Empfangen eines Dienstpakets durch eine Schutzknotenvorrichtung, Bestimmen, durch die Schutzknotenvorrichtung gemäß einer voreingestellten Regel und basierend auf Paketkopfinformationen des Dienstpakets, einer dem Dienstpaket entsprechenden Ringschutzteilinstanz, wobei die Schutzknotenvorrichtung eine Vorrichtung ist, die wenigstens einen RPL-Port umfasst (301);
Bestimmen, durch die Schutzknotenvorrichtung, ob ein RPL-Port, welcher der Ringschutzteilinstanz entspricht, der das Dienstpaket entspricht, mit einem Port übereinstimmt, der zum Empfangen des Dienstpakets verwendet wird (302);
falls sich der RPL-Port, welcher der Ringschutzteilinstanz entspricht, der das Dienstpaket entspricht, von dem Port unterscheidet, der zum Empfangen des Dienstpakets verwendet wird, Bestimmen, durch die Schutzknotenvorrichtung basierend auf einer voreingestellten Entsprechung zwischen der Ringschutzteilinstanz und einem Weiterleitungspfad, des Weiterleitungspfads, der zum Weiterleiten des Dienstpakets verwendet wird (Schritt 303); und
Weiterleiten, durch die Schutzknotenvorrichtung, des Dienstpakets basierend auf dem Weiterleitungspfad (304).

6. Verfahren nach Anspruch 5, wobei das Verfahren weiterhin umfasst:
Verwerfen, durch die Schutzknotenvorrichtung, des Dienstpakets, falls der RPL-Port, welcher der Ringschutzteilinstanz entspricht, der das Dienstpaket entspricht, mit dem übereinstimmt, der zum Empfangen des Dienstpakets verwendet wird.

7. Herkömmliche Knotenvorrichtung, wobei die herkömmliche Knotenvorrichtung auf ein Ethernet-Ring-Protection-Switching(ERPS)-Netz angewendet wird, wobei wenigstens eine Ringschutzinstanz für jeden ERPS-Ring in dem ERPS-Netz konfiguriert ist, jede Ringschutzinstanz wenigstens zwei Ringschutzteilinstanzen umfasst, jede Ringschutzteilinstanz jeweils einem Ring-Protection-Link(RPL)-Port entspricht, ein Status des RPL-Ports ein blockierter Zustand ist und, wenn die herkömmliche Knotenvorrichtung den RPL-Port nicht umfasst, die Knotenvorrichtung umfasst:
eine Empfangseinheit, die zum Empfangen eines Dienstpakets konfiguriert ist;
eine Verarbeitungseinheit, konfiguriert zum: Bestimmen, gemäß einer voreingestellten Regel und basierend auf Paketkopfinformationen des Dienstpakets, das durch die Empfangseinheit empfangen wird, einer dem Dienstpaket entsprechenden Ringschutzteilinstanz; und Bestimmen, basierend auf einer voreingestellten Korrespondenz zwischen der Ringschutzteilinstanz und einem Weiterleitungspfad, des Weiterleitungspfads, der zum Weiterleiten des Dienstpakets verwendet wird; und
eine Sendeeinheit, die zum Weiterleiten des Dienstpakets basierend auf dem durch die Verarbeitungseinheit bestimmten Weiterleitungspfad konfiguriert ist.

8. Herkömmliche Knotenvorrichtung nach Anspruch 7, wobei die voreingestellte Regel eine Entsprechung zwischen einem Hashwert und der Ringschutzteilinstanz umfasst; wobei
die Verarbeitungseinheit weiterhin konfiguriert ist zum:
Berechnen, basierend auf voreingestellten Bytes einer Virtual-Local-Area-Network(VLAN)-Kennung und einer Media-Access-Control(MAC)-Adresse, die in den Paketkopfinformationen des durch die Empfangseinheit empfangenen Dienstpakets transportiert werden, eines Hashwerts, der dem Dienstpaket entspricht, wobei es sich bei der MAC-Adresse um eine Quell-MAC-Adresse oder eine Ziel-MAC-Adresse handelt; und
Bestimmen, basierend auf dem Hashwert und gemäß der voreingestellten Regel, der dem Dienstpaket entsprechenden Ringschutzteilinstanz.

9. Herkömmliche Knotenvorrichtung nach Anspruch 7, wobei die voreingestellte Regel eine Entsprechung zwischen einem Wert eines voreingestellten Felds des Dienstpakets und der Ringschutzteilinstanz umfasst; wobei das voreingestellte Feld ein Prioritätsfeld und ein Feld für die VLAN-Kennung umfasst; und
die Verarbeitungseinheit weiterhin konfiguriert ist zum: Erhalten von Werten des Prioritätsfelds und des Felds für die VLAN-Kennung in den Paketkopfinformationen des durch die Empfangseinheit empfangenen Dienstpakets; und
Bestimmen, basierend auf den Werten des Prioritätsfelds und des Felds für die VLAN-Kennung und gemäß der voreingestellten Regel, der dem Dienstpaket entsprechenden Ringschutzteilinstanz.

10. Herkömmliche Knotenvorrichtung nach Anspruch 7, wobei die voreingestellte Regel eine Entsprechung zwischen einer Dienstart und der Ringschutzteilinstanz umfasst; wobei
die Verarbeitungseinheit weiterhin konfiguriert ist zum:
Erhalten eines Dienstartfelds in den Paketkopfinformationen des durch die Empfangseinheit empfangenen Dienstpakets, wobei das Dienstartfeld zum Angeben der Dienstart des Dienstpakets verwendet wird; und
Bestimmen, basierend auf dem Dienstartfeld und gemäß der voreingestellten Regel, der dem Dienstpaket entsprechenden Ringschutzteilinstanz.

11. Schutzknotenvorrichtung, wobei die Schutzknotenvorrichtung auf ein Ethernet-Ring-Protection-Switching(ERPS)-Netz angewendet wird, wobei wenigstens eine Ringschutzinstanz für jeden ERPS-Ring in dem ERPS-Netz konfiguriert ist, jede Ringschutzinstanz wenigstens zwei Ringschutzteilinstanzen umfasst, jede Ringschutzteilinstanz jeweils einem Ring-Protection-Link(RPL)-Port entspricht, ein Status des RPL-Ports ein blockierter Zustand ist und als Vorrichtung, die wenigstens einen RPL-Port umfasst, die Knotenvorrichtung umfasst:
eine Empfangseinheit, die zum Empfangen eines Dienstpakets konfiguriert ist;
eine Verarbeitungseinheit, konfiguriert zum: Bestimmen, gemäß einer voreingestellten Regel und basierend auf Paketkopfinformationen des Dienstpakets, einer dem Dienstpaket entsprechenden Ringschutzteilinstanz; Bestimmen, ob ein RPL-Port, welcher der Ringschutzteilinstanz entspricht, der das Dienstpaket entspricht, mit einem Port übereinstimmt, der zum Empfangen des Dienstpakets verwendet wird; und falls sich der RPL-Port, welcher der Ringschutzteilinstanz entspricht, der das Dienstpaket entspricht, von dem Port unterscheidet, der zum Empfangen des Dienstpakets verwendet wird, Bestimmen, basierend auf einer voreingestellten Entsprechung zwischen der Ringschutzteilinstanz und einem Weiterleitungspfad, des Weiterleitungspfads, der zum Weiterleiten des Dienstpakets verwendet wird; und
eine Sendeeinheit, die zum Weiterleiten des Dienstpakets basierend auf dem durch die Verarbeitungseinheit bestimmten Weiterleitungspfad konfiguriert ist.

12. Schutzknotenvorrichtung nach Anspruch 11, wobei die Verarbeitungseinheit weiterhin konfiguriert ist zum Verwerfen des Dienstpakets, wenn der RPL-Port, welcher der Ringschutzteilinstanz entspricht, der das Dienstpaket entspricht, mit dem übereinstimmt, der zum Empfangen des Dienstpakets verwendet wird.

13. Herkömmliche Knotenvorrichtung, umfassend einen Speicher, einen Prozessor, einen Sendeempfänger und einen Bus, wobei der Speicher, der Prozessor und der Sendeempfänger mithilfe des Busses miteinander verbunden sind, der Speicher Programmcode speichert und der Prozessor zum Ausführen des Verfahrens nach einem der Ansprüche 1 bis 4 basierend auf dem Programmcode konfiguriert ist.

14. Schutzknotenvorrichtung, umfassend einen Speicher, einen Prozessor, einen Sendeempfänger und einen Bus, wobei der Speicher, der Prozessor und der Sendeempfänger mithilfe des Busses miteinander verbunden sind, der Speicher Programmcode speichert und der Prozessor zum Ausführen des Verfahrens nach Anspruch 5 oder 6 basierend auf dem Programmcode konfiguriert ist.

15. Computerlesbares Aufzeichnungsmedium, in dem ein Programm aufgezeichnet ist, wobei das Programm bei Ausführung den Computer dazu befähigt, das Verfahren nach einem der Ansprüche 1 bis 4 basierend auf dem Programmcode auszuführen.

16. Computerlesbares Aufzeichnungsmedium, in dem ein Programm aufgezeichnet ist, wobei das Programm bei Ausführung den Computer dazu befähigt, das Verfahren nach Anspruch 5 oder 6 basierend auf dem Programmcode auszuführen.

## Revendications

1. Procédé de transmission de paquet de service, dans lequel le procédé est appliqué à un réseau à commutation de protection d'anneau Ethernet, ERPS, dans lequel au moins une instance de protection d'anneau est configurée pour chaque anneau ERPS sur le réseau ERPS, chaque instance de protection d'anneau comprend au moins deux sous-instances de protection d'anneau, chaque sous-instance de protection d'anneau correspond respectivement à un port de liaison de protection d'anneau, RPL, un état du port RPL est un état bloqué, et le procédé comprend :
lors de la réception d'un paquet de service par un dispositif de nœud ordinaire, la détermination, par le dispositif de nœud ordinaire selon une règle prédéfinie et sur la base d'informations d'en-tête de paquet du paquet de service, d'une sous-instance de protection d'anneau correspondant au paquet de service, dans lequel le dispositif de nœud ordinaire est un dispositif qui ne comprend pas le port RPL (201) ;
la détermination, par le dispositif de nœud ordinaire sur la base d'une correspondance prédéfinie entre la sous-instance de protection d'anneau et une voie de transfert, de la voie de transfert utilisée pour transférer le paquet de service (étape 202) ; et
le transfert, par le dispositif de nœud ordinaire, du paquet de service sur la base de la voie de transfert (203).

2. Procédé selon la revendication 1, dans lequel la règle prédéfinie comprend une correspondance entre une valeur de hachage et la sous-instance de protection d'anneau ;
dans lequel au moment de la réception du paquet de service, la détermination, par le dispositif de nœud ordinaire selon la règle prédéfinie et sur la base d'informations d'en-tête de paquet du paquet de service, de la sous-instance de protection d'anneau correspondant au paquet de service, comprend spécifiquement :
lors de la réception du paquet de service, le calcul, par le dispositif de nœud ordinaire sur la base d'octets prédéfinis d'un identifiant de réseau local virtuel, VLAN, et d'une adresse de contrôle d'accès au support, MAC, qui sont portés dans les informations d'en-tête de paquet, d'une valeur de hachage correspondant au paquet de service, dans lequel l'adresse MAC est une adresse MAC de source ou une adresse MAC de destination ; et
la détermination, par le dispositif de nœud ordinaire sur la base de la valeur de hachage et selon la règle prédéfinie, de la sous-instance de protection d'anneau correspondant au paquet de service.

3. Procédé selon la revendication 1, dans lequel la règle prédéfinie comprend une correspondance entre une valeur d'un champ prédéfini du paquet de service et la sous-instance de protection d'anneau ; dans lequel le champ prédéfini comprend un champ de priorité et un champ d'identifiant de VLAN ; et
au moment de la réception du paquet de service, la détermination, par le dispositif de nœud ordinaire selon la règle prédéfinie et sur la base d'informations d'en-tête de paquet du paquet de service, de la sous-instance de protection d'anneau correspondant au paquet de service, comprend spécifiquement :
l'obtention, par le dispositif de nœud ordinaire, de valeurs du champ de priorité et du champ d'identifiant de VLAN dans les informations d'en-tête de paquet lors de la réception du paquet de service ; et
la détermination, par le dispositif de nœud ordinaire sur la base des valeurs du champ de priorité et du champ d'identifiant de VLAN et selon la règle prédéfinie, de la sous-instance de protection d'anneau correspondant au paquet de service.

4. Procédé selon la revendication 1, dans lequel la règle prédéfinie comprend une correspondance entre un type de service et la sous-instance de protection d'anneau ;
dans lequel au moment de la réception du paquet de service, la détermination, par le dispositif de nœud ordinaire selon la règle prédéfinie et sur la base d'informations d'en-tête de paquet du paquet de service, de la sous-instance de protection d'anneau correspondant au paquet de service, comprend spécifiquement :
l'obtention, par le dispositif de nœud ordinaire, d'un champ de type de service dans les informations d'en-tête de paquet du paquet de service lors de la réception du paquet de service, dans lequel le champ de type de service est utilisé pour indiquer le type de service du paquet de service ; et
la détermination, par le dispositif de nœud ordinaire sur la base du champ de type de service et selon la règle prédéfinie, de la sous-instance de protection d'anneau correspondant au paquet de service.

5. Procédé de transmission de paquet de service, dans lequel le procédé est appliqué à un réseau à commutation de protection d'anneau Ethernet, ERPS, dans lequel au moins une instance de protection d'anneau est configurée pour chaque anneau ERPS sur le réseau ERPS, chaque instance de protection d'anneau comprend au moins deux sous- instances de protection d'anneau, chaque sous-instance de protection d'anneau correspond respectivement à un port de liaison de protection d'anneau, RPL, un état du port RPL est un état bloqué, et le procédé comprend :
lors de la réception d'un paquet de service par un dispositif de nœud de protection, la détermination, par le dispositif de nœud de protection selon une règle prédéfinie et sur la base d'informations d'en-tête de paquet du paquet de service, d'une sous-instance de protection d'anneau correspondant au paquet de service, dans lequel le dispositif de nœud de protection est un dispositif qui comprend au moins un port RPL (301) ;
la détermination, par le dispositif de nœud de protection, permettant de savoir si un port RPL correspondant à la sous-instance de protection d'anneau à laquelle le paquet de service correspond est le même qu'un port utilisé pour recevoir le paquet de service (302) ;
si le port RPL correspondant à la sous-instance de protection d'anneau à laquelle le paquet de service correspond est différent du port utilisé pour recevoir le paquet de service, la détermination, par le dispositif de nœud de protection sur la base d'une correspondance prédéfinie entre la sous-instance de protection d'anneau et une voie de transfert, de la voie de transfert utilisée pour transférer le paquet de service (étape 303) ; et
le transfert, par le dispositif de nœud de protection, du paquet de service sur la base de la voie de transfert (304).

6. Procédé selon la revendication 5, dans lequel le procédé comprend en outre :
le rejet, par le dispositif de nœud de protection, du paquet de service si le port RPL correspondant à la sous-instance de protection d'anneau à laquelle le paquet de service correspond est le même que le port utilisé pour recevoir le paquet de service.

7. Dispositif de nœud ordinaire, dans lequel le dispositif de nœud ordinaire est appliqué à un réseau à commutation de protection d'anneau Ethernet, ERPS, dans lequel au moins une instance de protection d'anneau est configurée pour chaque anneau ERPS sur le réseau ERPS, chaque instance de protection d'anneau comprend au moins deux sous-instances de protection d'anneau, chaque sous-instance de protection d'anneau correspond respectivement à un port de liaison de protection d'anneau, RPL, un état du port RPL est un état bloqué, et en tant que dispositif de nœud ordinaire ne comprenant pas le port RPL, le dispositif de nœud comprend :
une unité de réception, configurée pour recevoir un paquet de service ;
une unité de traitement, configurée pour : déterminer, selon une règle prédéfinie et sur la base d'informations d'en-tête de paquet du paquet de service reçu par l'unité de réception, une sous-instance de protection d'anneau correspondant au paquet de service ; et déterminer, sur la base d'une correspondance prédéfinie entre la sous-instance de protection d'anneau et une voie de transfert, la voie de transfert utilisée pour transférer le paquet de service ; et
une unité d'envoi, configurée pour transférer le paquet de service sur la base de la voie de transfert déterminée par l'unité de traitement.

8. Dispositif de nœud ordinaire selon la revendication 7, dans lequel la règle prédéfinie comprend une correspondance entre une valeur de hachage et la sous-instance de protection d'anneau ; dans lequel
l'unité de traitement est en outre configurée pour : calculer, sur la base d'octets prédéfinis d'un identifiant de réseau local virtuel, VLAN, et d'une adresse de contrôle d'accès au support, MAC, qui sont portés dans les informations d'en-tête de paquet du paquet de service reçu par l'unité de réception, une valeur de hachage correspondant au paquet de service, dans lequel l'adresse MAC est une adresse MAC de source ou une adresse MAC de destination ; et
déterminer, sur la base de la valeur de hachage et selon la règle prédéfinie, la sous-instance de protection d'anneau correspondant au paquet de service.

9. Dispositif de nœud ordinaire selon la revendication 7, dans lequel la règle prédéfinie comprend une correspondance entre une valeur d'un champ prédéfini du paquet de service et la sous-instance de protection d'anneau ; dans lequel le champ prédéfini comprend un champ de priorité et un champ d'identifiant de VLAN ; et
l'unité de traitement est en outre configurée pour : obtenir des valeurs du champ de priorité et du champ d'identifiant de VLAN dans les informations d'en-tête de paquet du paquet de service reçu par l'unité de réception ; et
déterminer, sur la base des valeurs du champ de priorité et du champ d'identifiant de VLAN et selon la règle prédéfinie, la sous-instance de protection d'anneau correspondant au paquet de service.

10. Dispositif de nœud ordinaire selon la revendication 7, dans lequel la règle prédéfinie comprend une correspondance entre un type de service et la sous-instance de protection d'anneau ; dans lequel
l'unité de traitement est en outre configurée pour : obtenir un champ de type de service dans les informations d'en-tête de paquet du paquet de service reçu par l'unité de réception, dans lequel le champ de type de service est utilisé pour indiquer le type de service du paquet de service ; et
déterminer, sur la base du champ de type de service et selon la règle prédéfinie, la sous-instance de protection d'anneau correspondant au paquet de service.

11. Dispositif de nœud de protection, dans lequel le dispositif de nœud de protection est appliqué à un réseau à commutation de protection d'anneau Ethernet, ERPS, dans lequel au moins une instance de protection d'anneau est configurée pour chaque anneau ERPS sur le réseau ERPS, chaque instance de protection d'anneau comprend au moins deux sous- instances de protection d'anneau, chaque sous-instance de protection d'anneau correspond respectivement à un port de liaison de protection d'anneau, RPL, un état du port RPL est un état bloqué, et en tant que dispositif comprenant au moins un port RPL, le dispositif de nœud comprend :
une unité de réception, configurée pour recevoir un paquet de service ;
une unité de traitement, configurée pour : déterminer, selon une règle prédéfinie et sur la base d'informations d'en-tête de paquet du paquet de service, une sous-instance de protection d'anneau correspondant au paquet de service ; déterminer si un port RPL correspondant à la sous-instance de protection d'anneau à laquelle le paquet de service correspond est le même qu'un port utilisé pour recevoir le paquet de service ; et lorsque le port RPL correspondant à la sous-instance de protection d'anneau à laquelle le paquet de service correspond est différent du port utilisé pour recevoir le paquet de service, déterminer, sur la base d'une correspondance prédéfinie entre la sous-instance de protection d'anneau et une voie de transfert, la voie de transfert utilisée pour transférer le paquet de service ; et
une unité d'envoi, configurée pour transférer le paquet de service sur la base de la voie de transfert déterminée par l'unité de traitement.

12. Dispositif de nœud de protection selon la revendication 11, dans lequel
l'unité de traitement est en outre configurée pour rejeter le paquet de service lorsque le port RPL correspondant à la sous-instance de protection d'anneau à laquelle le paquet de service correspond est le même que le port utilisé pour recevoir le paquet de service.

13. Dispositif de nœud ordinaire, comprenant une mémoire, un processeur, un émetteur-récepteur et un bus, dans lequel la mémoire, le processeur et l'émetteur-récepteur sont mutuellement connectés en utilisant le bus, la mémoire stocke un code de programme et le processeur est configuré pour réaliser le procédé selon l'une quelconque des revendications 1 à 4 sur la base du code de programme.

14. Dispositif de nœud de protection, comprenant une mémoire, un processeur, un émetteur-récepteur et un bus, dans lequel la mémoire, le processeur et l'émetteur-récepteur sont mutuellement connectés en utilisant le bus, la mémoire stocke un code de programme et le processeur est configuré pour réaliser le procédé selon la revendication 5 ou 6 sur la base du code de programme.

15. Support d'enregistrement lisible par ordinateur sur lequel un programme est enregistré, dans lequel le programme, lorsqu'il est exécuté, permet à l'ordinateur de réaliser le procédé selon l'une quelconque des revendications 1 à 4 sur la base du code de programme.

16. Support d'enregistrement lisible par ordinateur sur lequel un programme est enregistré, dans lequel le programme, lorsqu'il est exécuté, permet à l'ordinateur de réaliser le procédé selon l'une quelconque des revendications 5 ou 6 sur la base du code de programme.
